# EUROPEAN PATENT SPECIFICATION

(11) **EP 3 570 469 B1**
(45) Date of publication and mention of the grant of the patent: **30.08.2023**
(21) Application number: 17910823.8
(22) Date of filing: 22.05.2017
(51) Int. Cl.: H04J 14/02, H04B 10/2513

(54) **DATA TRANSMISSION METHOD AND APPARATUS**
DATENÜBERTRAGUNGSVERFAHREN UND -VORRICHTUNG
PROCÉDÉ ET APPAREIL DE TRANSMISSION DE DONNÉES

(43) Date of publication of application: 20.11.2019
(73) Proprietor: Huawei Technologies Co., Ltd., Longgang District Shenzhen, Guangdong 518129 (CN)
(72) Inventor: ZHOU, Sujie, Shenzhen Guangdong 518129 (CN); LUO, Long, Shenzhen Guangdong 518129 (CN); CHEN, Jun, Shenzhen Guangdong 518129 (CN); WAN, Jin, Shenzhen Guangdong 518129 (CN)
(74) Representative: Gill Jennings & Every LLP
(86) International application number: PCT/CN2017/085390
(87) International publication number: WO 2018/214004

(56) References cited:
- EP-A1- 3 152 850
- EP-A2- 1 394 968
- WO-A1-2015/178997
- CN-A- 101 860 401
- CN-A- 104 486 028
- CN-A- 104 639 276
- CN-A- 106 301 588
- "The prospect of inter-data-center optical networks", IEEE COMMUNICATIONS MAGAZINE, IEEE SERVICE CENTER, PISCATAWAY, US, vol. 51, no. 9, 1 September 2013 (2013-09-01), XP011525694, ISSN: 0163-6804, DOI: 10.1109/MCOM.2013.6588647 [retrieved on 2013-09-03]
- ZHENNING TAO ET AL: "Complexity-reduced digital nonlinear compensation for coherent optical system", PROCEEDINGS OF SPIE, vol. 8647, 11 January 2013 (2013-01-11), page 86470K, XP055662011, 1000 20th St. Bellingham WA 98225-6705 USA ISSN: 0277-786X, DOI: 10.1117/12.2002284 ISBN: 978-1-5106-2687-4

## Description

### TECHNICAL FIELD

This disclosure relates to the field of fiber optic communications technologies, and in particular, to a data transmission method and apparatus.

### BACKGROUND

In fiber optic communications, a network structure of a metro wavelength division multiplexing network is usually presented as an aggregated type. To be specific, a plurality of access nodes correspond to one core node, service data of the plurality of access nodes is aggregated to the core node for reception, and the core node sends service data to the plurality of access nodes.

In the prior art, because a distance of metro transmission is usually within 200 kilometers, considering a cost factor, an incoherent solution of direct modulation and direct detection is usually used for data transmission. To be specific, a transmit end modulates a signal by using a light intensity modulator and sends the signal, and a receive end receives the signal by using a photodetector. In a process in which the core node sends the service data to the plurality of access nodes, the core node modulates one piece of service data to one optical carrier by using the light intensity modulator, so that one optical signal is formed and sent to one corresponding access node. The access node receives the optical signal by using the photodetector. Because the optical signal carrying the service data has dispersion in a transmission process, after receiving the optical signal, the access node usually performs dispersion compensation by using an equalizer.

In a process of implementing this disclosure, the prior art has at least the following problems:
In a data transmission process, the core node, as the transmit end, uses one optical carrier to modulate each piece of service data, so that each transmission link occupies one wavelength resource. Resource utilization is low. In addition, dispersion compensation is performed only by disposing the equalizer at the access point. Consequently, component complexity of the access point is high, and power consumption is high.

"The prospect of inter-data-center optical networks", IEEE Communications Magazine, IEEE service center, Piscataway, US discusses traffic growth trends and capacity demands of inter-data-center networks.

Zhenning Tao et al: "Complexity-reduced Digital Nonlinear Compensation for Coherent Optical System" discusses intra-channel nonlinearity compensation algorithms.

EP3152850 describes a method for transmitting data over an optical super-channel partitions the data unequally into a set of data streams for transmission over the set of sub-channels of the super-channel, such that a size of a first data stream for transmission over a first sub-channel is different than a size of a second data stream of the data for transmission over a second sub-channel

### SUMMARY

The present invention is defined by the appended claims. Embodiments not falling within the scope of the claims are exemplary only. To resolve a problem in the prior art, embodiments of this disclosure provide a data transmission method and apparatus. The technical solutions are as follows:

According to a first example, a data transmission method is provided, including:
obtaining at least two pieces of service data, and determining frequency sub-bands of the at least two pieces of service data, where the frequency sub-bands of the at least two pieces of service data are different frequency sub-bands of a frequency band of a same optical carrier;
mapping each piece of service data to the frequency sub-band of each piece of service data, to generate at least two to-be-sent service signals, where the at least two to-be-sent service signals are service signals pre-compensated based on dispersion and/or non-linear characteristics of the at least two to-be-sent service signals; and
sending the at least two to-be-sent service signals through the same optical carrier, wherein the determining frequency sub-bands of the at least two pieces of service data comprises:
determining the frequency sub-bands of the at least two pieces of service data based on transmission distances of the at least two pieces of service data, wherein for each piece of service data, if the transmission distance of the service data is larger, a location of the frequency sub-band of the service data is closer to a central location of the frequency band of the optical carrier.

In the technical solution provided in this disclosure, the plurality of pieces of service data are mapped to the different frequency sub-bands of the one optical carrier, so that the one optical carrier can carry the plurality of pieces of service data, thereby significantly increasing resource utilization. In addition, each piece of service data can be pre-compensated on a transmit end, so that a receive end does not need to compensate received service data, thereby reducing component complexity of the receive end, ensuring low power consumption of the receive end, and significantly reducing costs of the receive end.

A frequency sub-band close to the central location of the frequency band of the optical carrier is assigned to service data having a relatively large transmission distance, so that a transmission loss of the service data having a relatively large transmission distance can be reduced, to ensure that signal strength of the service data arriving at the receive end enables the receive end to successfully receive the service data, thereby properly assigning the frequency sub-band.

In a possible implementation, the signal transmission quality of the at least two to-be-sent service signals is determined by dispersion characteristics of respective transmission channels, and/or, the signal transmission quality of the at least two to-be-sent service signals is determined by non-linear characteristics of respective receive ends.

In a possible implementation, when the signal transmission quality of the at least two to-be-sent service signals is determined by dispersion characteristics of respective transmission channels, the method further includes:
for each piece of service data, determining a dispersion compensation component of the service data based on a transmission distance of the service data; and performing dispersion compensation on each piece of service data based on the dispersion compensation component of the piece of service data.

Dispersion compensation is performed on the service data on the transmit end, so that component complexity of the receive end can be reduced, to ensure low power consumption of the receive end, and reduce costs of the receive end.

In a possible implementation, when the signal transmission quality of the at least two to-be-sent service signals is determined by non-linear characteristics of respective receive ends, the method further includes:
obtaining a non-linear parameter of the receive end corresponding to each piece of service data, where the non-linear parameter corresponding to each piece of service data is used to indicate non-linear impact of the corresponding receive end on transmission quality of the service data; and performing non-linear compensation on each piece of service data based on the non-linear parameter corresponding to each piece of service data.

Non-linear compensation is performed on the service data on the transmit end, so that component complexity of the receive end can be reduced, to ensure low power consumption of the receive end, and reduce costs of the receive end.

In a possible implementation, before the mapping each piece of service data to the frequency sub-band of each piece of service data, the method further includes:
adding a DC component for each piece of service data, where the DC component corresponding to each piece of service data is used to indicate that a corresponding receive end detects the frequency sub-band of the service data.

The DC component is separately added to each piece of service data, so that when detecting the service data, the receive end can successfully move a central location of the frequency sub-band of the service data to a zero frequency location, thereby increasing accuracy and a success rate of data receiving.

In a possible implementation, before the mapping each piece of service data to the frequency sub-band of each piece of service data, the method further includes:
determining a baseband modulation scheme of each piece of service data based on an amount of transmitted data of the piece of service data; and performing baseband modulation on each piece of service data based on the baseband modulation scheme of the piece of service data, where
for each piece of service data, if the amount of transmitted data of the service data is larger, a modulation order of the baseband modulation scheme of the service data is higher.

A modulation scheme having a relatively high modulation order is used to modulate the service data having a relatively large transmission data amount, thereby increasing frequency band utilization.

According to a second example, a data transmission method is provided, including:
receiving at least two service signals through a same optical carrier, where frequency sub-bands of the at least two service signals are different frequency sub-bands of the same optical carrier, and the at least two service signals are service signals pre-compensated by a transmit end based on signal transmission quality of the at least two to-be-sent service signals; and
determining, in the frequency sub-bands of the at least two service signals, a frequency sub-band of to-be-received service data, and demapping the determined frequency sub-band to obtain the to-be-received service data.

In the technical solution provided in this disclosure, the plurality of pieces of service data are mapped to the different frequency sub-bands of the one optical carrier, so that the one optical carrier can carry the plurality of pieces of service data, thereby significantly increasing resource utilization. In addition, each piece of service data can be pre-compensated on the transmit end, so that a receive end does not need to compensate received service data, thereby reducing component complexity of the receive end, ensuring low power consumption of the receive end, and significantly reducing costs of the receive end.

Moreover, for each piece of service data in the at least two pieces of service data, if a transmission distance of the service data is larger, a location of the frequency sub-band of the service data is closer to a central location of a frequency band of the optical carrier.

A frequency sub-band close to the central location of the frequency band of the optical carrier is assigned to service data having a relatively large transmission distance, so that a transmission loss of the service data having a relatively large transmission distance can be reduced, to ensure that signal strength of the service data arriving at the receive end enables the receive end to successfully receive the service data, thereby properly assigning the frequency sub-band.

In a possible implementation, the signal transmission quality of the at least two service signals is determined by dispersion characteristics of respective transmission channels, and/or, the signal transmission quality of the at least two service signals is determined by non-linear characteristics of respective receiving components.

In a possible implementation, the method further includes:
determining a demodulation scheme of the to-be-received service data based on preset modulation information, where the preset modulation information is used to indicate the demodulation scheme of the to-be-received service data; and
demodulating the to-be-received service data based on the demodulation scheme.

According to a third example, a data transmission apparatus is provided. The apparatus includes one or more function modules. The one or more function modules are configured to implement the data transmission method according to the first example and any possible implementation of the first example, and can achieve same or corresponding technical effects. Details are not described herein again.

According to a fourth example, a data transmission apparatus is provided. The apparatus includes one or more function modules. The one or more function modules are configured to implement the data transmission method according to the second example and any possible implementation of the second example, and can achieve same or corresponding technical effects. Details are not described herein again.

According to a fifth example, a data transmission system is provided. The system includes one or more transmit ends according to the first example and a plurality of receive ends according to the second example.

According to a sixth example, a computer-readable storage medium is provided. The computer-readable storage medium stores an instruction, and when the instruction is run on a computer, the computer is enabled to perform the data transmission method according to the first example and/or the second example.

According to a seventh example, a computer program product including an instruction is provided. When the computer program product is run on a computer, the computer is enabled to perform the data transmission method according to the first example and/or the second example.

### BRIEF DESCRIPTION OF DRAWINGS

FIG. 1 is a schematic structural diagram of a fiber optic network used for data transmission according to an embodiment of this disclosure;
FIG. 2A is a flowchart of a data transmission method according to an embodiment of this disclosure;
FIG. 2B is a schematic diagram of a ring network according to an embodiment of this disclosure;
FIG. 2C is a schematic diagram of a bandwidth effect of a DAC component of a transmit end according to an embodiment of this disclosure;
FIG. 2D is a schematic diagram of a relationship between a frequency sub-band and a central location of a frequency band of an optical carrier according to an embodiment of this disclosure;
FIG. 2E is a schematic diagram of a service data processing process of a transmit end according to an embodiment of this disclosure;
FIG. 2F is a schematic diagram of signal reception performed by a receive end according to an embodiment of this disclosure;
FIG. 2G is a schematic diagram of data transmission according to an embodiment of this disclosure;
FIG. 3 is a block diagram of a data transmission apparatus according to an embodiment of this disclosure; and
FIG. 4 is a block diagram of a data transmission apparatus according to an embodiment of this disclosure.

### DESCRIPTION OF EMBODIMENTS

To make the objectives, technical solutions, and advantages of this disclosure clearer, the following further describes the implementations of this disclosure in detail with reference to the accompanying drawings.

To explain embodiments of this disclosure more clearly, the following describes an application scenario of the embodiments of this disclosure.

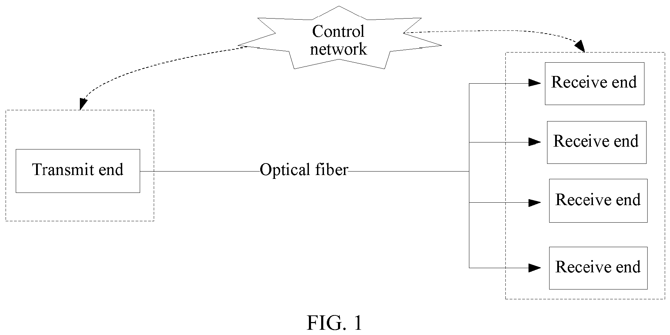

The embodiments of this disclosure are applied to a metro wavelength division multiplexing network and a fiber optic network having a service form the same as that of the metro wavelength division multiplexing network. The same service form is a point-to-multipoint (Point-to-Multipoint, PTMP) form. The metro wavelength division multiplexing network may include scenarios such as metro access, metro virtual domain control (Domain Control, DC), and wireless backhaul. As shown in FIG. 1, a network structure of a fiber optic network in a PTMP form is usually presented as an aggregated type. To be specific, service data of a plurality of access nodes (Access Node) is aggregated to one core node (Core Node) for reception, and the core node may send service data to the plurality of access nodes. In the embodiments of this disclosure, a link from the access node to the core node in the fiber optic network is referred to as an uplink, and a link from the core node to the access node in the fiber optic network is referred to as a downlink.

In the fiber optic network provided in the embodiments of this disclosure, service data is transmitted between the core node and the access node by using a control network. The control network may be the wired Internet, or may be a wireless network. This is not limited in the embodiments of this disclosure.

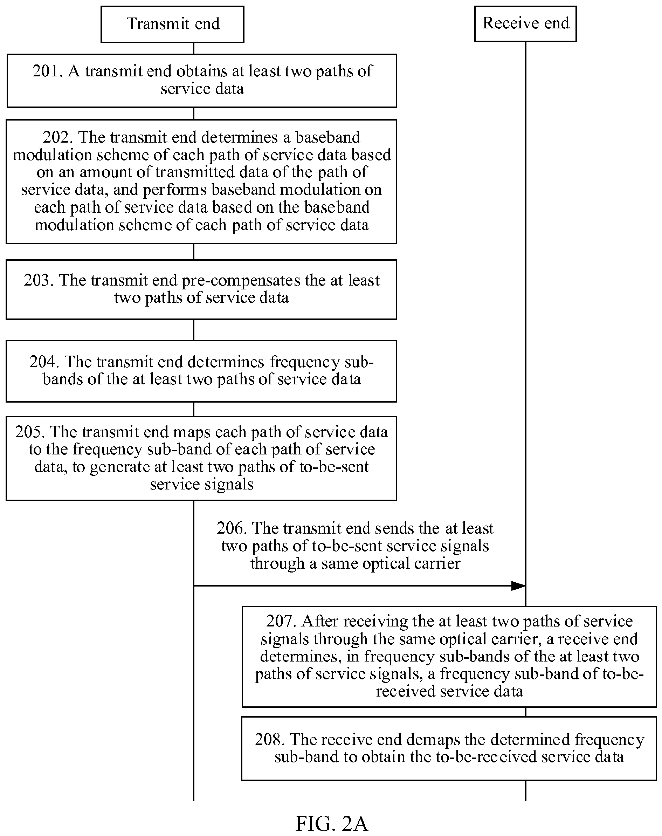

To increase wavelength resource utilization of an optical carrier, and reduce component complexity of an access node, the embodiments of this disclosure provide a data transmission method for a downlink from a core node to the access node. For a detailed process, refer to the embodiment provided in FIG. 2A. It should be noted that in a service direction indicated by the downlink, the core node is used as a transmit end, and the access node is used as a receive end. Both a transmit end and a receive end in the embodiment provided in FIG. 2A are the transmit end and the receive end in the service direction.

FIG. 2A is a flowchart of a data transmission method according to an embodiment of this disclosure. Referring to FIG. 2A, the method includes the following steps.

201. A transmit end obtains at least two pieces of service data.

The transmit end may send service data to a plurality of receive ends. The plurality of the receive end may be determined based on line deployment of a fiber optic network. After the line deployment of the fiber optic network is determined, information about the plurality of receive ends corresponding to the transmit end may be configured onto the transmit end. For example, identifiers of the plurality of receive ends corresponding to the transmit end are configured onto the transmit end. The transmit end obtains, based on the identifiers of the plurality of receive ends corresponding to the transmit end, at least two pieces of service data corresponding to the identifiers of the plurality of receive ends. The transmit end may obtain the at least two pieces of service data from a data center. The data center is configured to generate (or gather), store, and manage service data of the fiber optic network.

A quantity of the at least two pieces of service data is less than or equal to a quantity of the plurality of receive ends corresponding to the transmit end. That is, the transmit end may send the service data to some or all of the plurality of receive ends. The quantity of the at least two pieces of service data depends on an actual service requirement. This is not limited in this embodiment.

Content of the at least two pieces of service data may be the same or different. This is not limited in this embodiment of this disclosure.

It should be noted that the at least two pieces of service data are independent of each other, and processing of any piece of service data by the transmit end is affected by another piece of service data.

202. The transmit end determines a baseband modulation scheme of each piece of service data based on an amount of transmitted data of the piece of service data, and performs baseband modulation on each piece of service data based on the baseband modulation scheme of the piece of service data.

For each piece of service data, the transmit end may detect the amount of transmitted data of the piece of service data. For example, in an implementation, the amount of transmitted data of the service data may be carried in the service data, for example, carried in a first byte or another specified byte in the service data, and the transmit end reads information about the byte to obtain the amount of transmitted data of the service data. Alternatively, in another implementation, the transmit end determines the amount of transmitted data of the service data based on a transmission rate and an obtaining time in a process of obtaining the service data, for example, uses a product of the transmission rate and the obtaining time as the amount of transmitted data of the service data.

In this embodiment of this disclosure, when the plurality of receive ends have different service volume requirements, to increase frequency band utilization, the service data having different transmission data amounts are modulated by using different baseband modulation schemes. For each piece of service data, if the amount of transmitted data of the service data is larger, a modulation order of the baseband modulation scheme of the service data is higher.

For example, in an implementation process, the transmit end may pre-configure a correspondence between the amount of transmitted data and a plurality of baseband modulation schemes. For example, a baseband modulation scheme corresponds to a value range indicating an amount of transmitted data. For each piece of service data, the transmit end determines a baseband modulation scheme of the piece of service data based on a value range in which the amount of transmitted data of the piece of service data falls. For example, the baseband modulation scheme corresponding to the value range in which the amount of transmitted data of the piece of service data falls is determined as the baseband modulation scheme of the piece of service data. In this embodiment, the transmit end separately modulates each piece of service data based on the baseband modulation scheme of the piece of service data.

It should be noted that an actually used baseband modulation scheme is not limited in this embodiment. For example, the baseband modulation scheme may include but is not limited to the following: differential phase shift keying (Differential Phase Shift Keying, DPSK), quadrature phase shift keying (Quadrature Phase Shift Keying, QPSK), quadrature amplitude modulation (Quadrature Amplitude Modulation, QAM), and the like.

It should be noted that after determining the baseband modulation scheme of each piece of service data, the transmit end may send baseband modulation information of corresponding service data to a receive end by using a control network. The baseband modulation information is used to indicate the baseband modulation scheme of the corresponding service data. In an implementation, the transmit end may send baseband modulation information of the at least two pieces of service data to the receive ends in a unified manner. The baseband modulation information is used to indicate the baseband modulation scheme of each piece of service data and an identifier of the receive end corresponding to the piece of service data. In another implementation, the transmit end may separately send the baseband modulation information of each piece of service data to the receive end corresponding to the piece of service data.

In an optical communication process, the receive end needs to use a photodetector (Photodetector, PD) to detect an optical signal, and to convert the optical signal into an electrical signal. The PD performs optical-to-electrical conversion by using a location in which a received optical signal has maximum signal strength as a center, to restore a central location of service data carried in the optical signal to a zero frequency. If the location in which the optical signal has the maximum signal strength is the central location of the service data, the central location of the service data may be accurately restored to the zero frequency, so that the service data is not distorted or lost, thereby ensuring that the service data is successfully received. However, if the location in which the optical signal has the maximum signal strength is not the central location of the service data, the central location of the service data cannot be restored to the zero frequency. Consequently, the service data is distorted or lost, resulting in failure in receiving the service data.

In the prior art, one optical carrier carries only one piece of service data. In this case, a central location of a frequency band of the optical carrier coincides with a central location of a frequency band of the service data, and the central location of the frequency band of the optical carrier is the location in which the optical signal has maximum strength. Therefore, when the PD receives the optical signal, the service data is not distorted or lost, and the service data is successfully received. In this embodiment of this disclosure, to ensure that the at least two pieces of service data carried in one optical carrier can be successfully received, before a same optical carrier is used to send the at least two pieces of service data, a DC component is added for each piece of service data. The DC component corresponding to each piece of service data is used to instruct a corresponding receive end to detect a frequency sub-band of the service data, so that the receive end can accurately detect a central location of the frequency sub-band of the piece of service data, to successfully receive the piece of service data.

The DC component added for each piece of service data may be the same or different. This is not limited in this embodiment. Certainly, the transmit end may alternatively determine a value of the DC component added for each piece of service data based on a location of the frequency sub-band of the piece of service data. For example, when the central location of the frequency sub-band of the service data is more distant from the central location of the frequency band of the optical carrier, the DC component added for the service data is larger, to compensate relatively large attenuation corresponding to the location relatively distant from the center of the optical carrier in a transmission process.

A process in which the DC component is added for each piece of service data may be performed before or after step 202 in which baseband modulation is performed on the piece of service data. This is not limited in this embodiment. For convenience of explanation and description, a process in which the DC component is added after baseband modulation is performed on the service data is used as an example. It is assumed that a 4-level signal after PAM4 modulation is performed on the service data is [-3, -1, 1, 3], the signal to which a DC component having a value of 4 is added is [1, 3, 5, 7]. In frequency domain, the DC component is located in a central location of a frequency sub-band corresponding to the service data.

203. The transmit end pre-compensates the at least two pieces of service data.

To reduce component complexity of the receive end and ensure low power consumption of the receive end, in this embodiment of this disclosure, the transmit end may separately precompensate the at least two pieces of service data. The pre-compensation includes at least one of dispersion pre-compensation and non-linear pre-compensation.

For each piece of service data, a process of performing dispersion pre-compensation on the service data may be: determining a dispersion compensation component of the service data based on a transmission distance of the service data; and performing dispersion compensation on each piece of service data based on the dispersion compensation component of the piece of service data.

The process of determining, by the transmit end, the dispersion compensation component of the service data may be: calculating, by the transmit end based on the transmission distance of each piece of service data, the dispersion compensation component of the service data by using a first preset algorithm. For example, the first preset algorithm may be used to: calculate a dispersion amount of the service data based on the transmission distance of the service data; and determine the dispersion compensation component of the service data based on the dispersion amount and a preset compensation factor, for example, use a sum or a product that are of the dispersion amount and the preset compensation factor as the dispersion compensation component of the service data. It should be noted that the transmission distance of the service data is a distance from the transmit end to the receive end corresponding to the service data. The distance between each receive end and the transmit end may be pre-configured onto the transmit end. Alternatively, the transmit end may send a detection signal to test the distance between the transmit end and the receive end. This is not limited in this embodiment.

The process of performing, by the transmit end, dispersion compensation on each piece of service data based on the dispersion compensation component of the piece of service data may be: for each piece of service data, obtaining, by the transmit end, related phase information of the service data, and then importing the dispersion compensation component of the service data and the related phase information into a second preset algorithm by using the dispersion compensation component of the service data and the related phase information as parameters, to adjust a phase of the service data, thereby completing dispersion pre-compensation on the service data. The transmit end may transform the service data to a frequency domain through fast Fourier transform (Fast Fourier Transform, FFT), to obtain the related phase information of the service data. The second preset algorithm may be set or modified in advance. This is not limited in this embodiment.

It should be noted that based on the dispersion pre-compensation, signal transmission quality of the at least two to-be-sent service signals is determined based on dispersion characteristics of respective transmission channels.

The non-linear pre-compensation is pre-compensation for a non-linear characteristic of the receive end corresponding to the service data. The process may be: obtaining a non-linear parameter of the receive end corresponding to each piece of service data, where the non-linear parameter of each piece of service data is used to indicate non-linear impact of the corresponding receive end on transmission quality of the service data; and performing non-linear compensation on each piece of service data based on the non-linear parameter corresponding to each piece of service data.

The non-linear parameter of the receive end may be pre-configured in the transmit end. The non-linear parameter of the receive end is used to indicate a non-linear characteristic of a component included in the receive end. The non-linear characteristic of the component affects the transmission quality of the service data, for example, causes non-linear deformation to the service data.

The process of performing, by the transmit end, non-linear compensation on each piece of service data based on the non-linear parameter corresponding to each piece of service data may be: determining a non-linear compensation amount of the service data based on the non-linear parameter corresponding to each piece of service data; importing the non-linear compensation amount of the service data into a third preset algorithm by using the non-linear compensation amount as a parameter, and performing non-linear compensation on the service data by using the third preset algorithm. The non-linear compensation amount of the service data may be measured offline through offline calibration. The third preset algorithm may be a Volterra-series algorithm or a state dependent path delay (State Dependent Path Delay, SDPD) algorithm, or the like. This is not limited in this embodiment.

It should be noted that based on the non-linear compensation on the receive end, the signal transmission quality of the at least two to-be-sent service signals is determined by non-linear characteristics of the respective receive ends.

It should be noted that, an order of performing step 203 and step 201 is not limited in this embodiment. In addition, when the compensation includes both dispersion pre-compensation and non-linear pre-compensation, an order of performing the two types of compensation is not limited either. To increase compensation efficiency, when the service data is still in a time domain state, nonlinear pre-compensation is performed on the service data, then the service data is transformed to the frequency domain, and dispersion pre-compensation is performed on the service data in the frequency domain state. Performing dispersion pre-compensation on the service data in the frequency domain state includes performing dispersion pre-compensation on a real part and an imaginary part of the service data.

204. The transmit end determines frequency sub-bands of the at least two pieces of service data.

The frequency sub-bands of the at least two pieces of service data are different frequency sub-bands of a frequency band of a same optical carrier. In this embodiment, one optical carrier includes a plurality of frequency sub-bands, and different frequency sub-bands are located in different locations of a frequency band of the optical carrier.

The process of determining the frequency sub-bands of the at least two pieces of service data may be performed before or after step 201. That is, the transmit end may preset the frequency sub-band of each piece of service data. For example, after a fiber optic network is deployed, frequency sub-bands of the plurality of receive ends corresponding to the transmit end are configured onto the transmit end, the transmit end determines the frequency sub-bands of the at least two pieces of service data based on the receive ends corresponding to the at least two pieces of service data. Alternatively, the transmit end may assign frequency sub-bands to service data in real time after obtaining the service data. This is not limited in this embodiment.

The process of determining, by the transmit end, the frequency sub-bands of the at least two pieces of service data may be: determining the frequency sub-bands of the at least two pieces of service data based on transmission distances of the at least two pieces of service data. For each piece of service data, if the transmission distance of the service data is larger, a location of the frequency sub-band of the service data is closer to the central location of the frequency band of the optical carrier. During actual application, a correspondence between the transmission distance and the frequency sub-band may be pre-configured in the transmit end. The transmit end determines, based on the transmission distance of each piece of service data, that the frequency sub-band corresponding to the transmission distance in the correspondence is the frequency sub-band of the service data. The transmission distance of the service data is a distance from the transmit end to the receive end corresponding to the service data. The distance between each receive end and the transmit end may be pre-configured onto the transmit end. Alternatively, the transmit end may send a detection signal to test the distance between the transmit end and the receive end. This is not limited in this embodiment.

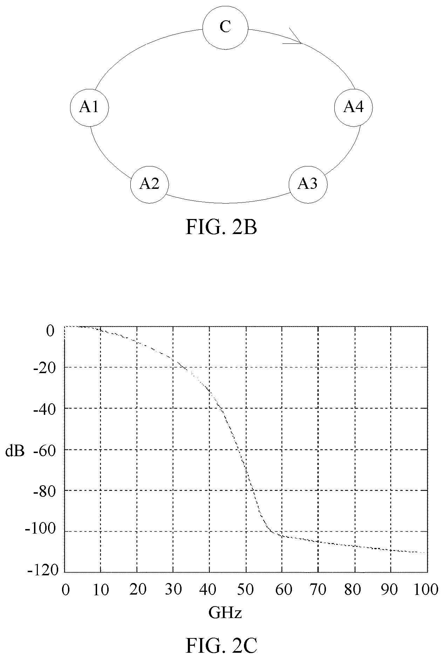

It should be noted that different receive ends in the fiber optic network may have different distances to the transmit end. That is, channel conditions of links corresponding to the different receive ends are different. A ring topology shown in FIG. 2B is used as an example. The figure includes a transmit end C and receive ends A1, A2, A3, and A4. Transmission in downlink is performed clockwise in the ring network. A4 is closest to C, and A1 is most distant from C. Due to losses of optical transmission, a channel condition from C to A1 is apparently poorer than a channel condition from C to A4. Consequently, A4 fails to receive the service data because a signal is excessively weak. Due to a bandwidth effect of a component of the transmit end, FIG. 2C is a schematic diagram of a bandwidth effect of a digital-to-analog converter (Digital-to-Analog Converter, DAC) of the transmit end, and it may be learned from the figure that a frequency band close to the optical carrier has relatively small power attenuation, and a frequency band distant from the optical carrier has relatively large power attenuation. Therefore, in this embodiment of this disclosure, the frequency sub-band of the service data is determined based on the transmission distance of the service data, so that a location of a frequency sub-band corresponding to service data having a larger transmission distance is closer to the central location of the frequency band of the optical carrier, thereby increasing accuracy and a success rate of receiving the service data by each receive end.

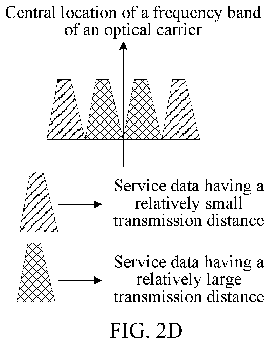

For example, the ring topology shown in FIG. 2B is still used as an example, frequency sub-bands closer to the optical carrier may be assigned to A1 and A2 having larger distances to C, and frequency sub-bands more distant from the optical carrier may be assigned to A3 and A4 having smaller distances to C, so that signal strength of service data transmitted to A1, A2, A3, and A4 can ensure that the service data is successfully received. A relationship between the frequency sub-bands corresponding to A1, A2, A3, and A4 and the central location of a frequency band of the optical carrier is shown in FIG. 2D.

It should be noted that in this embodiment, the frequency sub-band assigned to the service data corresponding to each receive end is not constant, and in an actual application process, frequency sub-bands may be flexibly and freely assigned to the service data through network scheduling. For example, for each piece of service data, the frequency sub-band assigned to the service data may be sent to the receive end corresponding to the service data by using network scheduling signaling. The network scheduling signaling carries information about the frequency sub-band corresponding to the service data. For example, the information about the frequency sub-band is used to indicate a central location of the frequency sub-band. The transmit end sends the network scheduling signaling by using a control network between the transmit end and the receive end. In an implementation, the transmit end may send frequency sub-band information of the at least two pieces of service data to the receive ends in a unified manner. The frequency sub-band information is used to indicate the frequency sub-band of each piece of service data and an identifier of the receive end corresponding to the piece of service data. In another implementation, the transmit end may separately send information about the frequency sub-band of each piece of service data to the receive end corresponding to the piece of service data.

205. The transmit end maps each piece of service data to the frequency sub-band of each piece of service data, to generate at least two to-be-sent service signals.

In this embodiment of this disclosure, a process of mapping, by the transmit end, each piece of service data to the frequency sub-band of the piece of service data, to generate the at least two to-be-sent service signals may be: for each piece of service data, transforming the service data to the frequency domain, and then mapping each piece of service data transformed to the frequency domain to the corresponding frequency sub-band by using a preset mapping algorithm. The service data may be transformed to the frequency domain through fast Fourier transform (Fast Fourier Transform, FFT). The process of mapping the service data to the corresponding frequency sub-band by using a preset mapping algorithm may be: when the preset mapping algorithm provides a plurality of input locations, and each input location corresponds to one frequency sub-band, inputting, by the transmit end based on the frequency sub-band corresponding to each piece of service data, the piece of service data to the input location corresponding to the frequency sub-band, to map the plurality of pieces of service data to the respective frequency sub-bands, and then transforming the plurality of pieces of service data located in different input locations to the time domain, to obtain the at least two to-be-sent service signals. The preset mapping algorithm may be an inverse fast Fourier transform (Inverse Fast Fourier Transform, IFFT), or the like. The frequency sub-band and the input location corresponding to the frequency sub-band in the preset mapping algorithm may be preset or modified as parameters. This is not limited in this embodiment.

It should be noted that after the service data is pre-compensated in step 203, the at least two to-be-sent service signals are service signals pre-compensated based on signal transmission quality of the at least two to-be-sent service signals.

It should be noted that the transmit end may further compensate the service data for a nonlinear characteristic of a component of the transmit end. For example, after the at least two service signals are obtained, signal equalization is performed based on a characteristic of the component of the transmit end, to compensate signal deformation brought by the component included in the transmit end. The component included in the transmit end may include: a modulator, a DAC, a laser driver, or the like. The transmit end may equalize the service signals based on non-linear characteristics of the modulator and the DAC, and a related bandwidth effect of the laser driver. The modulator includes a baseband modulator and a carrier modulator. The baseband modulator is configured to perform baseband modulation on the service data, and the carrier modulator modulates the plurality of pieces of service data to the same optical carrier.

206. The transmit end sends the at least two to-be-sent service signals through the same optical carrier.

In this embodiment of this disclosure, the transmit end may obtain an idle optical carrier from an optical carrier resource pool to carry the at least two to-be-sent service signals. In an implementation, the optical carrier resource pool is used to indicate a plurality of optical carriers. The transmit end may obtain the idle optical carrier from the resource pool based on an idle mark. For each optical carrier, if the optical carrier has an idle mark, it is determined that the optical carrier is an idle optical carrier; and if the optical carrier has no idle mark, it is determined that the optical carrier has been occupied. In another implementation, the optical carrier resource pool is used to indicate a plurality of idle optical carriers. The transmit end may randomly obtain an optical carrier from the resource pool to carry the at least two to-be-sent service signals. After an optical carrier occupied by the transmit end is released, the transmit end registers information about the optical carrier, for example, registers frequency band information of the optical carrier with the resource pool.

The process of sending, by the transmit end, the at least two to-be-sent service signals through the same optical carrier may be: the transmit end modulates the at least two to-be-sent service signals to the same optical carrier based on a preset carrier modulation scheme, to send the at least two to-be-sent service signals to the receive ends through the same optical carrier. The preset carrier modulation scheme may be preset or modified. For example, the preset carrier modulation scheme may be a Mach-Zehnder modulator principle-based carrier modulation scheme. This is not limited in this embodiment.

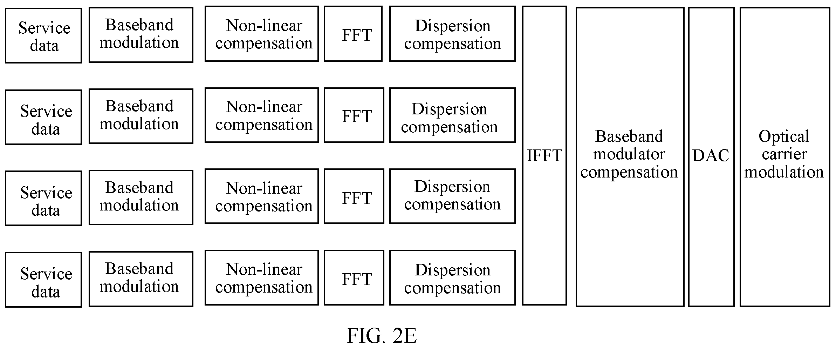

To more clearly describe the foregoing process of sending the service data by the transmit end, this embodiment provides a schematic diagram of a service data processing process of the transmit end shown in FIG. 2E. The processing process is shown by using an example in which there are four pieces of service data.

In this embodiment of this disclosure, because the transmit end has pre-compensated the service data, the receive end does not need to perform any compensation on the service data. A receiving process of a data transmission process in this embodiment of this disclosure is described by using one receive end as an example. The receiving process includes the following steps.

207. After receiving the at least two service signals through the same optical carrier, the receive end determines, in frequency sub-bands of the at least two service signals, a frequency sub-band of to-be-received service data.

It may be learned from step 204 that the transmit end sends, to the receive end by using network scheduling signaling, the frequency sub-band of the corresponding service data. Therefore, after receiving the network scheduling signaling of the transmit end, the receive end extracts frequency sub-band information corresponding to the receive end from the network scheduling signaling, and stores the frequency sub-band information. The receive end may determine, based on the frequency sub-band information, a central location of a frequency sub-band of service data corresponding to the receive end. The receive end may obtain, based on an identifier of the receive end, the frequency sub-band information corresponding to the identifier of the receive end from the network scheduling signaling. It should be noted that in this embodiment, a bandwidth of the frequency sub-band corresponding to each piece of service data may be set in a unified manner. The bandwidth is usually stable. Therefore, bandwidth information of the frequency sub-band corresponding to the service data may be configured onto the receive end. Certainly, if the bandwidth information changes, the receive end may also be informed of the bandwidth information by using the network scheduling signaling. This is not limited in this embodiment.

The process of sending, by the receive end, in the frequency sub-bands of the at least two service signals, a frequency sub-band of to-be-received service data includes: the receive end adjusts, based on the stored frequency sub-band information, a center frequency of a tunable filter of the receive end to a central location of the frequency sub-band that is indicated by the frequency sub-band information, and filters the at least two service signals based on the adjusted tunable filter. A frequency sub-band of a service signal matching the center frequency of the tunable filter is the frequency sub-band of the to-be-received service data of the receive end.

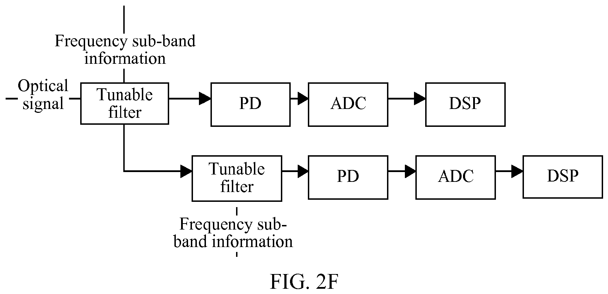

It should be noted that in this embodiment, the tunable filter has a drop port (Drop port), and the service signal matching the center frequency of the tunable filter may be output to a PD of the receive end through the drop port, to perform step 208. The tunable filter further has a structure of a through port (through port). A service signal not matching the center frequency of the tunable filter in the at least two service signals is output through the port, to be received by a next receive end. FIG. 2F is a schematic diagram of receiving a signal by a receive end. A type of the tunable filter is not limited in this embodiment. For example, the tunable filter may be a microring filter.

208. The receive end demaps the determined frequency sub-band to obtain the to-be-received service data.

The demapping means that the to-be-received service data is moved from the central location of the frequency sub-band to a zero frequency location. Because the DC component is added to each piece of service data on the transmit end, the PD of the receive end may move a location (namely, the central location of the frequency sub-band) in which signal strength in the frequency sub-band is maximum to the zero frequency location, to complete the demapping process, and obtain the to-be-received service data.

It should be noted that, as shown in FIG. 2F, after the demapping is performed by using the PD, analog-to-digital conversion is further performed on the service data by using an analog to digital converter (Analog to Digital Converter, ADC), and the to-be-received service data is demodulated by using a signal processor (Digital Signal Processor, DSP). A process of the demodulation may be: determining a demodulation scheme of the to-be-received service data based on preset modulation information, where the preset modulation information is used to indicate the demodulation scheme of the to-be-received service data; and demodulating the to-be-received service data based on the demodulation scheme.

It may be learned from step 202 that the transmit end sends the baseband modulation information of each piece of service data to the receive end by using the control network. When the transmit end sends the baseband modulation information of the at least two pieces of service data to the plurality of receive ends in a unified manner, each receive end obtains, based on the identifier of the receive end, the baseband modulation information corresponding to the identifier of the receive end, and stores the baseband modulation information as the preset modulation information. When the transmit end separately sends the baseband modulation information for each piece of service data, the receive end stores the received baseband modulation information as the preset modulation information.

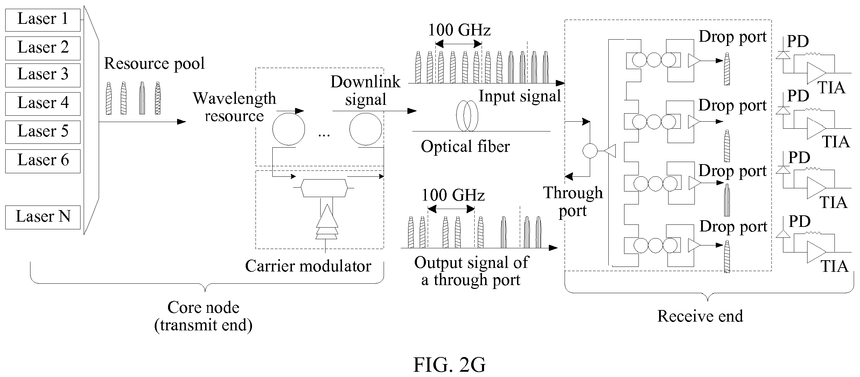

To present the data transmission process provided in FIG. 2A more clearly, FIG. 2G provides a schematic diagram of data transmission.

The core node includes a plurality of sending units, and each sending unit transmits, by using a laser, the optical signal carrying the plurality of pieces of service data in the same optical carrier. Different sending units may send the service data to a same receive end. The laser may be a Fabry-Perot laser diode (Fabry-Perot Laser Diode, FP-LD) or another type of laser diode. This is not limited in this embodiment.

The resource pool includes a plurality of optical carriers indicating different frequency bands. In the figure, different filling patterns are used to represent different optical carriers. A frequency band range corresponding to the optical carrier is not limited. For example, the frequency band range of the optical carrier may be 100 GHz, 50 GHz, or the like. In the figure, 100 GHz is used as an example. In addition, the figure shows an example in which there are four pieces of service data. That is, an optical carrier having a color is divided into four frequency sub-bands. The figure is shown by using an example in which a Mach-Zehnder modulator performs modulation.

A receive end may include a plurality of receiving units. The figure is shown by using an example in which the receive end includes four receiving units. A filter type of the receive end is a microring filter. A TIA is a transimpedance amplifier (Transimpedance Amplifier, TIA), and is configured to amplify an input signal.

In the method provided in the embodiments of this disclosure, the plurality of pieces of service data are mapped to the different frequency sub-bands of the one optical carrier, so that the one optical carrier can carry the plurality of pieces of service data, thereby significantly increasing resource utilization. In addition, each piece of service data can be pre-compensated on a transmit end, so that a receive end does not need to compensate received service data, thereby reducing component complexity of the receive end, ensuring low power consumption of the receive end, and significantly reducing costs of the receive end.

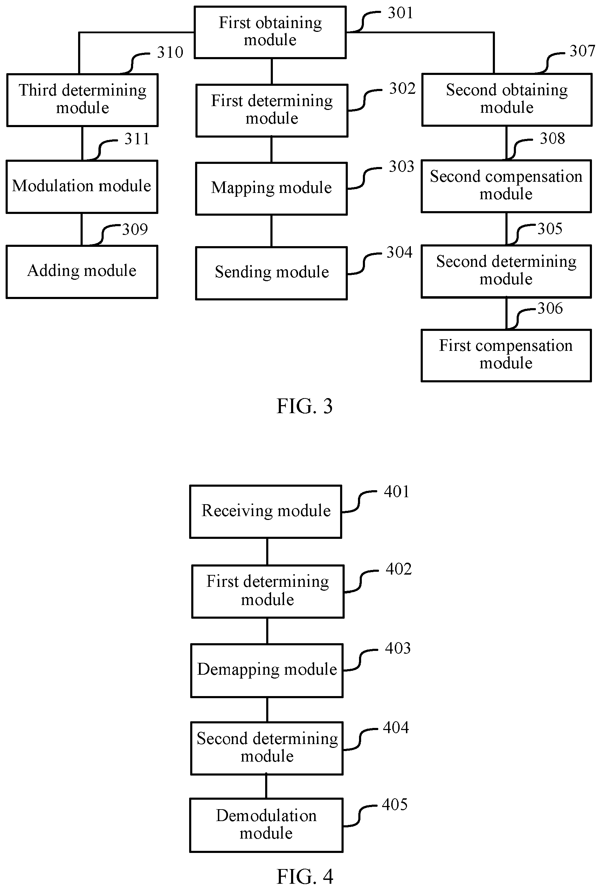

FIG. 3 is a block diagram of a data transmission apparatus according to an embodiment of this disclosure. Referring to FIG. 3, the apparatus includes:
a first obtaining module 301, configured to perform the process shown in step 201;
a first determining module 302, configured to perform the process shown in step 204;
a mapping module 303, configured to perform the process shown in step 205;
a sending module 304, configured to perform the process shown in step 206;
a second determining module 305, configured to perform the process of determining a dispersion compensation component of the service data in the dispersion pre-compensation process in step 203;
a first compensation module 306, configured to perform the process of performing dispersion compensation in the dispersion pre-compensation process in step 203;
a second obtaining module 307, configured to perform the process of determining and obtaining the non-linear parameter of the receive end in the non-linear pre-compensation process in step 203;
a second compensation module 308, configured to perform the process of performing nonlinear pre-compensation in the non-linear pre-compensation process in step 203;
an adding module 309, configured to perform the process of adding the DC component for the service data in step 202;
a third determining module 310, configured to perform the process of determining the baseband modulation scheme of each piece of service data in step 202; and
a modulation module 311, configured to perform the process of performing baseband modulation on the service data in step 202.

FIG. 4 is a block diagram of a data transmission apparatus according to an embodiment of this disclosure. Referring to FIG. 4, the apparatus includes:
a receiving module 401, configured to perform the process of receiving the service signal in step 207;
a first determining module 402, configured to perform the process of determining the frequency sub-band of the to-be-received service data in step 207;
a demapping module 403, configured to perform the process shown in step 208;
a second determining module 404, configured to perform the process of determining the demodulation scheme of the service data in step 208; and
a demodulation module 405, configured to perform the process of performing demodulation on the service data in step 208.

It should be noted that, when the data transmission apparatus provided in the foregoing embodiment transmits data, division of the foregoing functional modules is merely used as an example for description. During actual application, the foregoing functional allocation can be implemented by different functional modules as required. That is, an internal structure of the device is divided into different functional modules to implement all or some functions described above. In addition, the data transmission apparatus provided in the foregoing embodiment belongs to the same concept as the data transmission method embodiment. For a specific implementation process of the apparatus, refer to the method embodiment, and details are not described herein again.

An embodiment of this disclosure further provides a data transmission system. The data transmission system includes one or more transmit ends and a plurality of receive ends. The transmit end is configured to perform the process performed by the transmit end in the foregoing data transmission method, and the receive end is configured to perform the process performed by the receive end in the foregoing method.

All or some of the foregoing embodiments may be implemented by means of software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments are all or partially generated. The computer may be a generalpurpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a soft disk, a hard disk, or a magnetic tape), an optical medium (for example, a digital versatile disc (DVD)), a semiconductor medium (for example, a Solid State Disk (SSD)), or the like.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing embodiments are not intended to limit this disclosure.

## Claims

1. A data transmission method, comprising:
obtaining at least two pieces of service data (201), and determining frequency sub-bands of the at least two pieces of service data (204), wherein the frequency sub-bands of the at least two pieces of service data are different frequency sub-bands of a frequency band of a same optical carrier;
mapping each piece of service data to the frequency sub-band of each piece of service data (205), to generate at least two to-be-sent service signals, wherein the at least two to-be-sent service signals are service signals pre-compensated (203) based on dispersion and/or non-linear characteristics of the at least two to-be-sent service signals; and
sending the at least two to-be-sent service signals through the same optical carrier (206)
**characterized in that** the determining frequency sub-bands of the at least two pieces of service data comprises:
determining the frequency sub-bands of the at least two pieces of service data based on transmission distances of the at least two pieces of service data, wherein
for each piece of service data, if the transmission distance of the service data is larger, a location of the frequency sub-band of the service data is closer to a central location of the frequency band of the optical carrier.

2. The method according to claim 1, wherein when pre-compensation of the at least two to-be-sent service signals is
based on dispersion characteristics of respective transmission channels, the method further comprises: for each piece of service data, determining a dispersion compensation component of the service
data based on a transmission distance of the service data; and performing dispersion compensation on each piece of service data based on the dispersion
compensation component of each piece of service data.

3. The method according to claim 1, wherein when pre-compensation of the at least two to-be-sent service signals is based on non-linear characteristics of respective receive ends, the method further comprises:
obtaining a non-linear parameter of the receive end corresponding to each piece of service data, wherein the non-linear parameter corresponding to each piece of service data is used to indicate nonlinear impact of the corresponding receive end on transmission quality of the service data; and
performing non-linear compensation on each piece of service data based on the non-linear parameter corresponding to each piece of service data.

4. A data transmission apparatus, comprising:
a first obtaining module (301), configured to obtain at least two pieces of service data;
a first determining module (302), configured to determine frequency sub-bands of the at least two pieces of service data, wherein the frequency sub-bands of the at least two pieces of service data are different frequency sub-bands of a frequency band of a same optical carrier;
a mapping module (303), configured to map each piece of service data to the frequency sub-band of each piece of service data, to generate at least two to-be-sent service signals, wherein the at least two to-be-sent service signals are service signals pre-compensated based on dispersion and/or non-linear characteristics of the at least two to-be-sent service signals; and
a sending module (304), configured to send the at least two to-be-sent service signals through the same optical carrier;
**characterized in that** the first determining module is configured to determine the frequency sub-bands of the at least two pieces of service data based on transmission distances of the at least two pieces of service data, wherein
for each piece of service data, if the transmission distance of the service data is larger, a location of the frequency sub-band of the service data is closer to a central location of the frequency band of the optical carrier.

5. The apparatus according to claim 4, wherein when pre-compensation of the at least two to-be-sent service signals is based on dispersion characteristics of respective transmission channels, the apparatus further comprises:
a second determining module (305), configured to: for each piece of service data, determine a dispersion compensation component of the service data based on a transmission distance of the service data; and
a first compensation module (306), configured to perform dispersion compensation on each piece of service data based on the dispersion compensation component of each piece of service data.

## Patentansprüche

1. Datenübertragungsverfahren, das umfasst:
Erhalten von zumindest zwei Dienstdatenelementen (201) und Bestimmen von Frequenzteilbändern der zumindest zwei Dienstdatenelemente (204), wobei die Frequenzteilbänder der zumindest zwei Dienstdatenelemente verschiedene Frequenzteilbänder eines Frequenzbands eines gleichen optischen Trägers sind;
Zuordnen von jedem Dienstdatenelement zum Frequenzteilband jedes Dienstdatenelements (205), um zumindest zwei zu sendende Dienstsignale zu erzeugen, wobei die zumindest zwei zu sendenden Dienstsignale Dienstsignale sind, die basierend auf Dispersions- und/oder nichtlinearen Charakteristiken der zumindest zwei zu sendenden Dienstsignale vorkompensiert (203) sind; und
Senden der zumindest zwei zu sendenden Dienstsignale durch den gleichen optischen Träger (206),
**dadurch gekennzeichnet, dass** das Bestimmen von Frequenzteilbändern der zumindest zwei Dienstdatenelemente umfasst:
Bestimmen der Frequenzteilbänder der zumindest zwei Dienstdatenelemente basierend auf Übertragungsstrecken der zumindest zwei Dienstdatenelemente, wobei für jedes Dienstdatenelement, wenn die Übertragungsstrecke der Dienstdaten größer ist, ein Ort des Frequenzteilbands der Dienstdaten näher an einem zentralen Ort des Frequenzbands des optischen Trägers ist.

2. Verfahren nach Anspruch 1, wobei, wenn eine Vorkompensation der zumindest zwei zu sendenden Dienstsignale auf Dispersionscharakteristiken jeweiliger Übertragungskanäle basiert, das Verfahren ferner umfasst:
für jedes Dienstdatenelement, Bestimmen einer Dispersionskompensationskomponente der Dienstdaten basierend auf einer Übertragungsstrecke der Dienstdaten und
Durchführen einer Dispersionskompensation an jedem Dienstdatenelement basierend auf der Dispersionskompensationskomponente jedes Dienstdatenelements.

3. Verfahren nach Anspruch 1, wobei, wenn eine Vorkompensation der zumindest zwei zu sendenden Dienstsignale auf nichtlinearen Charakteristiken jeweiliger Empfangsseiten basiert, das Verfahren ferner umfasst:
Erhalten eines nichtlinearen Parameters der Empfangsseite, der jedem Dienstdatenelement entspricht, wobei der nichtlineare Parameter, der jedem Dienstdatenelement entspricht, zum Angeben einer nichtlinearen Auswirkung der entsprechenden Empfangsseite auf die Übertragungsqualität der Dienstdaten verwendet wird; und
Durchführen einer nichtlinearen Kompensation an jedem Dienstdatenelement basierend auf dem nichtlinearen Parameter, der jedem Dienstdatenelement entspricht.

4. Datenübertragungsvorrichtung, die umfasst:
ein erstes Erhaltungsmodul (301), das zum Erhalten von zumindest zwei Dienstdatenelementen ausgelegt ist;
ein erstes Bestimmungsmodul (302), das zum Bestimmen von Frequenzteilbändern der zumindest zwei Dienstdatenelemente, wobei die Frequenzteilbänder der zumindest zwei Dienstdatenelemente verschiedene Frequenzteilbänder eines Frequenzbands eines gleichen optischen Trägers sind, ausgelegt ist;
ein Zuordnungsmodul (303), das zum Zuordnen von jedem Dienstdatenelement zum Frequenzteilband jedes Dienstdatenelements, um zumindest zwei zu sendende Dienstsignale zu erzeugen, wobei die zumindest zwei zu sendenden Dienstsignale Dienstsignale sind, die basierend auf Dispersions- und/oder nichtlinearen Charakteristiken der zumindest zwei zu sendenden Dienstsignale vorkompensiert sind, ausgelegt ist; und
ein Sendemodul (304), das zum Senden der zumindest zwei zu sendenden Dienstsignale durch den gleichen optischen Träger ausgelegt ist;
**dadurch gekennzeichnet, dass** das erste Bestimmungsmodul zum Bestimmen der Frequenzteilbänder der zumindest zwei Dienstdatenelemente basierend auf Übertragungsstrecken der zumindest zwei Dienstdatenelemente ausgelegt ist, wobei für jedes Dienstdatenelement, wenn die Übertragungsstrecke der Dienstdaten größer ist, ein Ort des Frequenzteilbands der Dienstdaten näher an einem zentralen Ort des Frequenzbands des optischen Trägers ist.

5. Vorrichtung nach Anspruch 4, wobei, wenn eine Vorkompensation der zumindest zwei zu sendenden Dienstsignale auf Dispersionscharakteristiken jeweiliger Übertragungskanäle basiert, die Vorrichtung ferner umfasst:
ein zweites Bestimmungsmodul (305), das ausgelegt ist zum: für jedes Dienstdatenelement, Bestimmen einer Dispersionskompensationskomponente der Dienstdaten basierend auf einer Übertragungsstrecke der Dienstdaten; und
ein erstes Kompensationsmodul (306), das zum Durchführen einer Dispersionskompensation an jedem Dienstdatenelement basierend auf der Dispersionskompensationskomponente jedes Dienstdatenelements ausgelegt ist.

## Revendications

1. Procédé de transmission de données, comprenant les étapes consistant à :
obtenir au moins deux morceaux de données de service (201) et déterminer des sous-bandes de fréquences des au moins deux morceaux de données de service (204), les sous-bandes de fréquences des au moins deux morceaux de données de service étant des sous-bandes de fréquences différentes d'une bande de fréquences d'un même support optique ;
mapper chaque morceau de données de service sur la sous-bande de fréquences de chaque morceau de données de service (205), pour générer au moins deux signaux de service à envoyer, les au moins deux signaux de service à envoyer étant des signaux de service pré-compensés (203) sur la base de caractéristiques de dispersion et/ou non linéaires des au moins deux signaux de service à envoyer ; et
envoyer les au moins deux signaux de service à envoyer sur le même support optique (206)
**caractérisé en ce que** la détermination de sous-bandes de fréquences des au moins deux morceaux de données de service consiste à :
déterminer les sous-bandes de fréquences des au moins deux morceaux de données de service sur la base de distances de transmission des au moins deux morceaux de données de service, dans lequel
pour chaque morceau de données de service, si la distance de transmission des données de service est plus importante, un emplacement de la sous-bande de fréquences des données de service est plus proche d'un emplacement central de la bande de fréquences du support optique.

2. Procédé selon la revendication 1, le procédé, lorsque la pré-compensation des au moins deux signaux de service à envoyer est basée sur des caractéristiques de dispersion de canaux de transmission respectifs, comprenant également les étapes consistant à :
pour chaque morceau de données de service, déterminer une composante de compensation de dispersion des données de service sur la base d'une distance de transmission des données de service ; et
effectuer une compensation de dispersion sur chaque morceau de données de service sur la base de la composante de compensation de dispersion de chaque morceau de données de service.

3. Procédé selon la revendication 1, le procédé, lorsque la pré-compensation des au moins deux signaux de service à envoyer est basée sur des caractéristiques non linéaires d'extrémités de réception respectives, comprenant également les étapes consistant à :
obtenir un paramètre non linéaire de l'extrémité de réception correspondant à chaque morceau de données de service, le paramètre non linéaire correspondant à chaque morceau de données de service étant utilisé pour indiquer un impact non linéaire de l'extrémité de réception correspondante sur la qualité de transmission des données de service ; et
effectuer une compensation non linéaire sur chaque morceau de données de service sur la base du paramètre non linéaire correspondant à chaque morceau de données de service.

4. Appareil de transmission de données, comprenant :
un premier module d'obtention (301), configuré pour obtenir au moins deux morceaux de données de service ;
un premier module de détermination (302), configuré pour déterminer des sous-bandes de fréquences des au moins deux morceaux de données de service, les sous-bandes de fréquences des au moins deux morceaux de données de service étant des sous-bandes de fréquences différentes d'une bande de fréquences d'un même support optique ;
un module de mappage (303), configuré pour mapper chaque morceau de données de service sur la sous-bande de fréquences de chaque morceau de données de service, pour générer au moins deux signaux de service à envoyer, les au moins deux signaux de service à envoyer étant des signaux de service pré-compensés sur la base de caractéristiques de dispersion et/ou non linéaires des au moins deux signaux de service à envoyer ; et
un module d'envoi (304), configuré pour envoyer les au moins deux signaux de service à envoyer sur le même support optique ;
**caractérisé en ce que** le premier module de détermination est configuré pour déterminer les sous-bandes de fréquences des au moins deux morceaux de données de service sur la base de distances de transmission des au moins deux morceaux de données de service, dans lequel
pour chaque morceau de données de service, si la distance de transmission des données de service est plus importante, un emplacement de la sous-bande de fréquences des données de service est plus proche d'un emplacement central de la bande de fréquences du support optique.

5. Appareil selon la revendication 4, l'appareil, lorsque la pré-compensation des au moins deux signaux de service à envoyer est basée sur des caractéristiques de dispersion de canaux de transmission respectifs, comprenant également :
un deuxième module de détermination (305), configuré pour : pour chaque morceau de données de service, déterminer une composante de compensation de dispersion des données de service sur la base d'une distance de transmission des données de service ; et
un premier module de compensation (306), configuré pour effectuer une compensation de dispersion sur chaque morceau de données de service sur la base de la composante de compensation de dispersion de chaque morceau de données de service.
